Europäisches Patentamt

European Patent Office

Office européen des brevets

(19)

(11) Publication number: **0 062 487**
**A2**

(12)

# EUROPEAN PATENT APPLICATION

(21) Application number: **82301680.3**

(22) Date of filing: **30.03.82**

(51) Int. Cl.³: **B 29 B 1/04**
// C08J3/20

(30) Priority: **31.03.81 US 249651**

(43) Date of publication of application: **13.10.82**
**Bulletin 82/41**

(84) Designated Contracting States: **BE DE FR GB IT SE**

(71) Applicant: **UNION CARBIDE CORPORATION, Old Ridgebury Road, Danbury Connecticut 06817 (US)**

(72) Inventor: **Nicholakopoulos, Antonios, 621 Paxson Avenue, Mercerville New Jersey (US)**
Inventor: **Gill, Grace Margaret, 186 Capricorn Drive, South Somerville New Jersey (US)**
Inventor: **Nadin, Robert Paul, 209 East View, Wharton New Jersey (US)**

(74) Representative: **Baverstock, Michael George Douglas et al, BOULT, WADE & TENNANT 27 Furnival Street, London, EC4A 1PQ (GB)**

(54) **Process for finishing resin using reduced energy input.**

(57) The specific energy input required to finish resin particles is considerably reduced when the resin particles are passed through a continuous finisher wherein the volume utilization of the finisher is between 40 volume percent and 95 volume percent, based on the total volume of the finisher, as compared to the prior practice of 10 to 30 volume percent utilization.

EP 0 062 487 A2

## PROCESS FOR FINISHING RESIN USING
## REDUCED ENERGY INPUT

Granular resins, as produced in polymerization reaction processes, are often put through a continuous finishing machine (sometimes called a continuous "intensive mixer") for various reasons in a commercial setting. For example, such a finishing machine might be used to improve the flowability of the resin particles, to provide a means to incorporate additives onto the resin particles.

Heretofore, continuous finishers have generally been commercially operated at a volume utilization of from about 10 to about 30 volume percent. It has long been felt that operation in this region is an efficient means to finish the resin particles in terms of machine reliability and final product properties.

It has now been found that the specific energy input required to finish resin particles can be significantly reduced vis-a-vis the former commercial practice when the resin particles are passed through a continuous finisher wherein the volume utilization of the finisher is between 40 volume percent and 95 volume percent, based on the total volume of the finisher.

This invention relates to a process of finishing resins wherein the volume utilization of the finisher is between 40 volume percent and 95 volume percent, based on the total volume of the finisher. At these volume utilization levels, energy input is substantially reduced as compared to the 10 to 30 percent volume utilization levels generally commercially used heretofore.

Typical finishers useful in the process of the present invention are described in U.S. Patent Nos. 3,472,491 and 3,229,002, incorporated herein by reference.

As indicated above, the resin useful in the process of this invention is in particulate form (e.g., granules, powder or pulverized particles). The particle size of the resin is not overly critical and can vary over a wide range. The particulate resin useful in the process of this invention preferably has a particle diameter of from 44 microns to 25,000 microns, and more preferably the particle size is from 70 microns to 2,500 microns in diameter.

In the process of this invention, when polyethylene is the resin selected, the resin particles enter the finisher at between ambient temperature and 200°F (preferably between 75°F and 180°F), and emerge from the finisher at an elevated temperature below the melt temperature of the resin. When using other resins such as, for example, polypropylene or polybutylene the entering temperature range for particles going into the finisher could be adjusted up or down depending upon the melting point of the particular resin used, as would be known to those skilled in the art. The rise in temperature of the resin during the finishing operation is due to the heat generated by mechanical friction caused by contact between and among resin particles, additives (if present), mixing arms and scrapers, and finisher walls. A temperature rise may also be effected by externally applied heat if desired for any purpose, such as to soften the resin particles.

Since most resinous polymers do not have sharp melting points, but instead melt over a wide range of perhaps 5°F to 15°F (3°C-8°C), it is impractical to specify the maximum finishing temperature for all the polymers that can be employed in the present invention. The determination of this temperature should be made for each polymer employed.

The term "resin" as used herein, denotes thermoplastic or thermosetting polymers, preferably aliphatic or aromatic monoolefins in which the backbone chain of the polymer macromolecule is preferably substantially a non-crosslinked hydrocarbon chain with aliphatic or aromatic substituents. Exemplary olefin polymers include polymers of ethylene, propylene, butene-1 and higher 1-alkenes having from 5 to 10 carbon atoms as well as polymers of styrene, ar(t-butyl)styrene, alphamethystyrene, ar-chlorostyrene, ar-bromostyrene, armethylstyrene and other monovinylidene aromatic monomers. It is understood that the term "resin" includes homopolymers, copolymers and interpolymers of the foregoing aliphatic and aromatic olefins as well as mixtures and blends of such homopolymers and copolymers.

Particularly preferred polyethylene polymers are low and medium density polymers such as those prepared in accordance with U.S. Patent 4,011,382, incorporated herein by reference.

Design characteristics of the finishing machine such as, for example, mixing arm density (number of sets of arms per inch of shaft), arm speed, arm thickness, and vessel aspect ratio, all influence the specific energy input required to process the resin. Depending upon the particular machine design chosen, it has been found that a specific energy input reduction of between 10 percent and 30 percent is achieved when operating within the instant finisher volume utilization range (40 to 95 percent) as compared to the prior practice (10 to 30 percent volume utilization range).

For example, when using a finisher having an inside diameter of 14 inches and a chamber length of 21 inches (e.g., Wedco 14/21) and a mixing arm thickness of 0.75 inch, it has been found that it is preferable to operate the finisher with the following design characteristics:

Froude Number: 60-120

Arm Density: 0.285-0.571 sets of arms per inch (2 arms per set)

The process of the present invention is suitably effected in a continuous fashion, although a semi-continuous method could be used if desired. The present process is preferably carried out at atmospheric pressure, although a higher or lower pressure could be used if desired.

The resin employed in the process of the invention can be added singly to the finisher in continuous fashion, or it can be added together with conventional additives, in either a single or multiple streams. The additives, if employed, are used in minor amounts of less than 50 weight percent, based upon the total composition in the finisher. Typical optional additives which can be liquids or solids would include, for example, pigments, dyes, fillers, stabilizers, lubricants, antistatic agents, fire retardants, or combinations thereof. Illustratively, such materials comprise comparatively large particle size solids, for example, stabilizers such as ultraviolet stabilizers as 2-hydroxy-4-n-octoxybenzophenone having particle sizes in the range of from 75 to 600 micrometers. Such materials also comprise somewhat smaller size solids, including, for example, pigments such as titanium dioxide, carbon black, ultramarine blue, cadmium orange, zinc oxide, iron oxide and similar materials, of particle size in the range from 5 micrometers down to particles having an average diameter less than 1 micrometer, e.g., about 0.2 micrometer. Other suitable solids include magnesium carbonate, calcium carbonate, silicon dioxide, asbestos china clay, lignite, anthracite coal, bituminous coal, silicates, wood dust, cork dust, cellulose and a wide variety of color agents. In addition, other fillers, fire retardants, stabilizers, etc., which are suitable include finely divided functional solids conventionally incorporated into resins.

The following examples are intended to illustrate, but in no way limit, the present invention.

## Example 1

Into a commercial finishing machine (Wedco #14/21) having the following design characteristics:

8 mixing arm sets (2 arms per set)

0.75 inch diameter arm

14 inch diameter by 21 inch length mixing chamber

2 scraper sets (2 scrapers per set) and operated at

700 inches per second mixing arm tip velocity

1039 rpm shaft speed

was continuously fed granular polyethylene resin particles having a particle size of between 70 and 2500 microns at temperature of 75°F. The resin had a melt index of 2 and a density of 0.920. The resin emerged from the finisher at a temperature of 210°F.

The resin flow rate was varied from 300 lbs/hr to 2460 lbs/hr in order to provide percent volume utilization of the finisher ranging from 24.3% to 55% respectively. A breakoff point for specific energy input (SEI) was found at between 48 and 55 percent volume utilization. Between these two points there was a 25.7 percent reduction in SEI.

The results are presented in Table I which follows.

## TABLE I

| Resin Flow Rate | Percent Volume Utilization | Specific Energy Input |
|---|---|---|
| lbs/hr | (of finisher) | kw·hr/lb |
| 300 | 24.3 | $4.00 \times 10^{-2}$ |
| 610 | 35.0 | $3.38 \times 10^{-2}$ |
| 920 | 41.8 | $3.28 \times 10^{-2}$ |
| 1200 | 48.0 | $3.23 \times 10^{-2}$ |
| 1440 | 49.2 | $2.96 \times 10^{-2}$ |
| 1820 | 50.7 | $2.53 \times 10^{-2}$ |
| 2060 | 51.6 | $2.50 \times 10^{-2}$ |
| 2460 | 55.0 | $2.40 \times 10^{-2}$ |

## Examples 2-3

Using identical procedures, ingredients and operating conditions as those of Example 1 above, except that either 6 mixing arm sets (Example 2) or 4 mixing arms sets (Example 3) were employed, resin was processed in order to find breakoff points for SEI. For Example 2 an SEI breakoff point at between a volume utilization of 65.5 and 70.1 was found whereas for Example 3 a breakoff was seen between 76.8 and 87.9 volume utilization of finishes.

The results are presented in Table 2 which follows.

## TABLE II

| Resin Flow Rate | Example 2 | | Example 3 | |
| | Percent Volume Utilization | Specific Energy Input | Percent Volume Utilization | Specific Energy Input |
| lbs/hr | (of Finisher) | kw·hr/lb | (of Finisher) | kw·hr/lb |
| 300 | 23.72 | $4.07 \times 10^{-2}$ | 23.7 | $3.83 \times 10^{-2}$ |
| 610 | 36.2 | $3.28 \times 10^{-2}$ | 37.3 | $3.28 \times 10^{-2}$ |
| 920 | 47.7 | $3.15 \times 10^{-2}$ | 53.0 | $3.18 \times 10^{-2}$ |
| 1200 | 53.1 | $3.08 \times 10^{-2}$ | 64.4 | $3.08 \times 10^{-2}$ |
| 1440 | 58.73 | $2.99 \times 10^{-2}$ | 76.8 | $3.06 \times 10^{-2}$ |
| 1760 | 65.5 | $2.89 \times 10^{-2}$ | - | - |
| 2160 | 70.1 | $2.73 \times 10^{-2}$ | - | - |
| 1720 | - | - | 85.6 | $2.98 \times 10^{-2}$ |
| 2060 | - | - | 87.9 | $2.82 \times 10^{-2}$ |

Example 4

Example 3 was repeated identically except that the finisher was operated at 604 inches per second mixing arm tip velocity, 825 rpm shaft speed. An SEI breakoff point was found at a finisher volume utilization between 90.6 and 93.5.

The results are presented in Table III which follows.

Table III

| Resin Flow Rate | Percent Volume Utilization | Specific Energy Input |
|---|---|---|
| lbs/hr | (of Finisher) | kw·hr/lb |
| 300 | 37.5 | $3.73 \times 10^{-2}$ |
| 610 | 60.3 | $3.11 \times 10^{-2}$ |
| 920 | 76.8 | $3.04 \times 10^{-2}$ |
| 1200 | 86.7 | $3.03 \times 10^{-2}$ |
| 1380 | 90.6 | $3.04 \times 10^{-2}$ |
| 1720 | 93.5 | $2.88 \times 10^{-2}$ |

CLAIMS:

1. A process for finishing particulate resin by continuously feeding the resin into a finisher and mechanically working the resin in the finisher to provide a finished resin having an elevated temperature, and thereafter discharging the finished resin from the finisher, characterised in that the finisher is operated at a volume utilization of between 40 and 95 volume percent.

2. A process as claimed in claim 1 wherein the resin is an ethylene, propylene or butene-1 homopolymer, copolymer or interpolymer.

3. A process as claimed in claim 1 or claim 2 wherein the resin enters the finisher at between ambient temperature and 200°F, and is discharged from the finisher at an elevated temperature below the melt temperature of the resin.

4. A process as claimed in any one of the preceding claims wherein the resin is in the form of granules, a powder or pulverized particles.

5. A process as claimed in claim 4 wherein the particles have a particle diameter of from 44 microns to 4000 microns.

6. A process as claimed in claim 5 wherein the particle diameter is from 70 microns to 2500 microns.

MGB/SJW/JF/EA 578